(19) Europäisches Patentamt
European Patent Office
Office européen des brevets

(11) Publication number: **0 011 295**
**A1**

(12)
# EUROPEAN PATENT APPLICATION

(21) Application number: 79104521.4

(22) Date of filing: 15.11.79

(51) Int. Cl.[3]: C 09 B 29/36
D 06 P 1/18, C 07 D 405/00

(30) Priority: 15.11.78 IT 2981778

(43) Date of publication of application:
28.05.80 Bulletin 80/11

(84) Designated Contracting States:
BE CH DE FR

(71) Applicant: Montedison S.p.A.
31, Foro Buonaparte
Milan(IT)

(72) Inventor: Battisti, Ruggero
36, Via Crespi
Novara(IT)

(72) Inventor: Bausani, Giovanni
4, Via Tiziano
Trecate (Novara)(IT)

(72) Inventor: Mazzaferro, Nicola
24, Via Spreafico
Novara(IT)

(74) Representative: Weinhold, Peter, Dr. Patentanwälte
Dipl.-Ing. P. Wirth Dr. V. Schmied-Kowarzik et al,
Dipl.-Ing. G. Dannenberg Dr. P. Weinhold, Dr. D. Gudel
Dipl.-Ing. S. Schubert Siegfriedstr. 8
D-8000 München 40(DE)

(54) **Yellow monoazo dyes of the 2-hydroxydibenzofuran series; their preparation and use for dyeing and printing synthetic hydrophobic fibres.**

(57) Water-insoluble yellow monoazo dyes, having the formula:

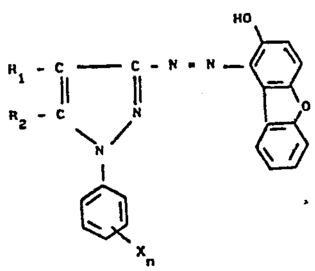

wherein $R_1$ and $R^2$ are indifferently hydrogen atoms, alkyls having up to 4 carbon atoms, phenyls, also substituted; X is an atom selected from among hydrogen, chlorine and bromine, or it is an alkyl group, an alkoxyl group, a carboxyester group having up to 4 carbon atoms, a carboxyl group, a group $CF_3$, CN, $NO_2$, $SO_2CH_3$, a sulphonamido group, and n is an integer selected from among 1, 2 and 3, methods of preparation and use of the foregoing are also disclosed.

The above dyes are particularly suited for the dyeing and printing of hydrophobic synthetic fibers, in particular polyester fibers, with yellow shades.

EP 0 011 295 A1

Croydon Printing Company Ltd.

0011295

This invention relates to a new class of water-insoluble yellow monoazo dyes.

These dyes are confirming to formula (I):

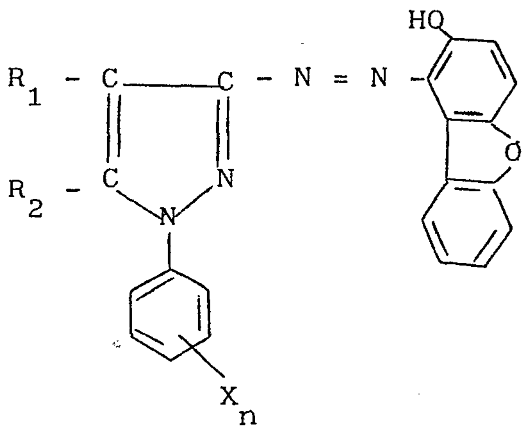

(I)

wherein $R_1$ and $R_2$ are indifferently hydrogen atoms, alkyls having up to 4 carbon atoms, phenyls, also substituted; X is an atom selected from amongst hydrogen, chlorine and bromine, or it is an alkyl group, an alkoxyl group, a carboxyester group having up to 4 carbon atoms, a carboxyl group, a group $CF_3$, CN, $NO_2$, $SO_2CH_3$, a sulphonamide group, and n is an integer selected from among 1, 2 and 3.

The present invention relates furthermore to the preparation of the dyes of formula (I) and the use of same.

The dyes object of this invention are particularly suitable for dyeing and printing hydrophobic synthetic fibres, in particular polyester fibres, with yellow shades.

These dyes, when applicated according to the usual dyeing and printing methods, provide on these materials dyeings and printings endowed with a high tinctorial strength and excellent general characteristics.

In particular the dyes of the present invention exhibit a high stability to light, to wet treatments and to heat treatments.

...

These dyes result also suitable for applications of the "Thermosol" type (190-220°C).

The dyes of the present invention have furthermore exhibited an excellent behaviour in the dyeing and printing of polyester-cotton blended fibres, according to known processes used at present, as they have all the main characteristics required for this application, i.e.:

- a good affinity for polyester fibres,
- affinity for cotton in the presence of swelling agents,
- possibility of obtaining dyeings with very slight differences of shades on the two fibres.

As far as the Applicant knows, the class of dyes comprised in formula (I) and object of the present invention is neither known nor has been described so far.

It is therefore an object of the present invention to provide a new class of azo dyes having particularly interesting applications in the fields specified hereinbefore.

This and still further objects, which will more clearly appear to those skilled in the Art, can be achieved, according to this invention, by the class of compounds having formula (I) and by the process for preparing same, characterized in that a 1-phenyl-3-amino-pyrazol of formula (II):

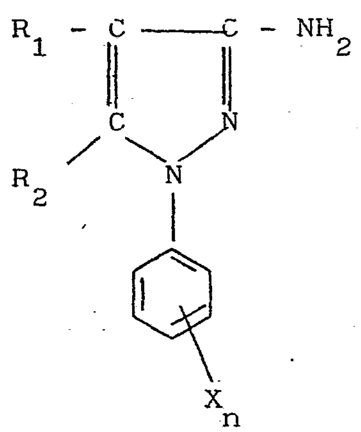

(II)

...

0011295

wherein $R_1$, $R_2$, X and n have the meanings specified hereinbefore, is diazotized at a temperature ranging from 0° to 5°C approximately, and is then coupled with a compound of formula (III):

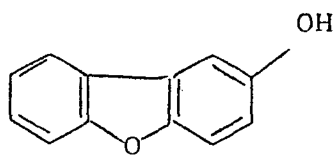

(III)

at a temperature ranging approximately from 5° to 20°C. The coupling compound employed (III) permits to operate at pH values comprised between about 3 and 10.

More in particular, and according to an embodiment of the present invention, the dyes forming the object of this invention are obtained by diazotizing, according to substantially conventional methods, the 1-phenyl-3-amino pyrazols of formula (II) as defined hereinbefore, and by successively coupling, in an acid to basic medium, the diazopyrazols obtained on 2-hydroxy-dibenzofuran of formula (III).

According to another effective ambodiment, the dyes of the present invention can be also prepared by oxidative diazotization of 1-phenyl-3-amino pyrazolins having formula (IV):

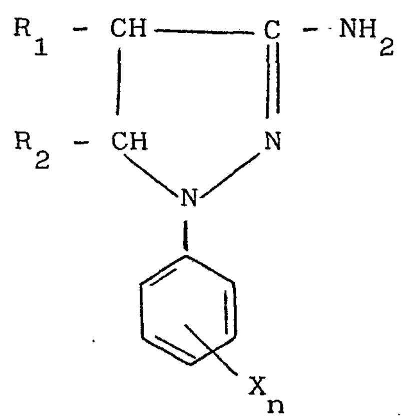

(IV)

...

wherein $R_1$, $R_2$, X and n have the meanings indicated herein above; in this manner it is possible to obtain the corresponding diazopyrazols, which are then coupled on 2-hydroxy-dibenzofuran of formula (III), as explained hereinbefore.

The abovesaid oxidative diazotation of the pyrazolins of formula (IV) is efficaciously conducted, for example, according to the method forming the object of Italian patent application No. 23725 A/78, according to which the amino-pyrazolins of formula (IV) are treated with nitrous acid in a ratio of from 2:1 to 5:1 in respect of amino-pyrazolins (IV), in an organic acid medium (acetic or propionic acid) or in an inorganic acid medium (hydrochloric acid, sulphuric acid, etc.) at a temperature in the range of from -10°C to +20°C. The nitrous acid, in its turn, is prepared from alkaline or alkyl nitrites, or from nitrosyl-sulphuric acid.

The resulting acid solution is ready to be used for the coupling with compound (III) according to the first embodiment described herein.

1-phenyl-3-amino pyrazolins (IV) can be prepared by conventional methods. For example, 1-phenyl-3-amino pyrazolin of formula (IV), where $R_1=R_2=X=H$ (Ilford Ltd., British patent No. 679,678), can be obtained by condensing phenylhydrazine with acrylonitrile in a basic medium.

1-phenyl-3-amino pyrazols (II) can be obtained, in their turn, by oxidizing the corresponding pyrazolins (IV), for example with chloranil in xylene (C. Alberti. Il Farmaco - Ed. Sc. vol. XIX, issue 7, page 638), or by flowing of air through an inert solvent (alcohols, acetic acid, aceto

nitrile) in the presence of copper salts (CuCl, $CuCl_2$, acetate) at about 20°C-40°C, as described in Belgian patent application No. 855,944 filed by the Applicant.

Finally, 2-hydroxy-dibenzofuran (III) can be prepared for example from 2-(2'-chlorophenyl)-hydroquinone by heating with NaOH or KOH (US patent No. 2,172,572).

Among the 1-phenyl-3-amino pyrazols (II) and the 1-phenyl--3-amino pyrazolins (IV) employed for obtaining compounds (I), the following may be cited:

1-phenyl-amino-pyrazol,
1,5-diphenyl-3-amino-pyrazol,
1-(3'-tolyl)-3-amino-pyrazol,
1-(2'-chlorophenyl-3-amino-pyrazol,
1-(3'-chlorophenyl)-3-amino-pyrazol,
1-(4'-chlorophenyl)-3-amino-pyrazol,
1-(4'-methoxyphenyl)-3-amino-pyrazol,
1-(4'-bromophenyl)-3-amino-pyrazol,
1-(2',4'-dichlorophenyl)-3-amino-pyrazol,
1-(2',5'-dichlorophenyl)-3-amino-pyrazol,
1-(3',4'-dichlorophenyl)-3-amino-pyrazol,
1-(2',4',5'-trichlorophenyl)-3-amino-pyrazol,
1-(3'-trifluoromethylphenyl)-3-amino-pyrazol,
1-(3'-carboxymethylesterphenyl)-3-amino-pyrazol,
1-phenyl-3-amino-4-methyl-pyrazol,
1-(3'-chlorophenyl)-3-amino-5-phenyl-pyrazol,
1-(3'-nitrophenyl)-3-amino-pyrazol,
1-(4'-nitrophenyl)-3-amino-pyrazol,
1-(3'-cyanophenyl)-3-amino-pyrazol,
1-(4'-sulphpmethylphenyl)-3-amino-pyrazol,

...

1-phenyl-3-amino-5-methyl-pyrazolin,
1-(3'-tolyl)-3-amino-4-methyl-pyrazoline,
1-(4'-ethoxyphenyl)-3-amino-pyrazolin,
1-(3'-bromophenyl)-3-amino-pyrazolin,
1-(2',6'-dichlorophenyl)-3-amino-pyrazolin,
1-(2',5'-dibromophenyl)-3-amino-pyrazolin,
1-(3',4'-dibromophenyl)-3-amino-pyrazolin,
1-(3',4',5'-tribromophenyl)-3-amino-pyrazolin,
1-(2',4'-dinitrophenyl)-3-amino-pyrazolin,
1-(4'-cyanophenyl)-3-amino-pyrazolin,
1-(3',5'-dimethoxyphenyl)-3-amino-pyrazolin,
1-(4'-chlorophenyl)-3-amino-5-phenyl-pyrazolin,
1-(4'-sulphamidophenyl)3-amino-pyrazolin.

The following examples are given to describe more in detail the present invention, without being however a limitation thereof.

EXAMPLE 1

5.82 g (0.03 moles) of 1-(3'-chlorophenyl)-3-amino-pyrazol were dissolved in 75 ml of water containing 45 ml of 22°Bé hydrochloric acid and diazotized at a temperature of from 0° to 5°C with a solution of 2.1 g of sodium nitrile in 15 ml of water. The diazo-derivative solution was dropped, at a temperature comprised between 5° and 10°C, into a solution consisting of 5.52 g (0.03 moles) of 2-hydroxy--dibenzofuran, of 70 ml of 36°Bé sodium hydrate and of 600 ml of water.

At the conclusion of the addition the whole was stirred for about 1 hour, it was acidified with hydrochloric acid and filtered, whereupon the precipitate was washed with water neutrality.

...

The dye obtained after drying was a yellow powder having the following centesimal composition: .

calculated values for

$C_{21}H_{13}ClN_{4}O_{2}$ C = 64.86% H = 3.34% N = 14.41%

found values C = 64.79% H = 3.34% N = 14.34%

what corresponded to the formula:

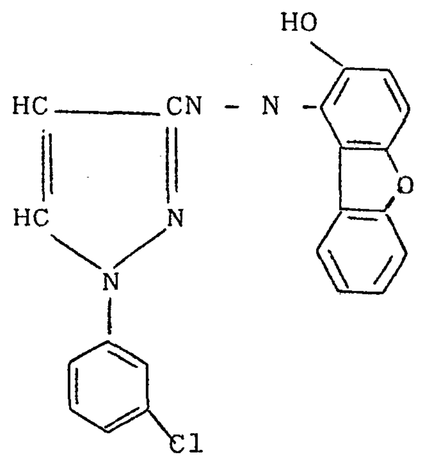

IR-analysis and mass-analysis were in accordance with the proposed structure.

EXAMPLE 2

1.93 g (0.01 moles) of 1-(3'-chlorophenyl)-3-amino-pyrazolin were dissolved in 60 g of acetic acid and 20 g of propionic acid.

20 ml of a 1N solution of nitrosylsulphuric acid in sulphuric acid were slowly dropped into the solution cooled down to 0-5°C.

The resulting diazo solution was let into 200 g of ice and 100 ml of water, and the nitrous acid in excess was removed by means of sulphamic acid.

The diazo solution was dropped, at a temperature of from 5° to 10°C, into a solution consisting of 1.84 g (0.01

...

moles) of 2-hydroxy-dibenzofuran, 100 ml of 36° Bé sodium hydrate and 600 ml of water.

At the conclusion of such addition the whole was stirred for about 1 hour, it was filtered and the precipitate was washed with water to neutrality.

The dye obtained after drying was identical with the one obtained in example 1.

EXAMPLE 3 (applicative example)

In an apparatus for dyeing under pressure, 100 g of a polyester fabric previously scoured, were treated for 10-15 minutes in 2 liters of a dyeing bath at 50°C containing 2 g/l of ammonium sulphate and 1 g/l of Emulson ELU (a non-ionogenic surfactant produced by Montedison).

1 g of the dye prepared according to example 1, previously dispersed and filtered through a sieve, was added thereto.

The bath was brought to a pH value = 5.5 with formic acid, it was heated to 90°C in 20-30 minutes, whereupon the temperature was gradually increased up to 130°C and was maintained at such value for 60 minutes. At the conclusion of dyeing, it was cooled to 80-85°C, the bath was discharged, it was washed and a reducing alkaline treatment was carried out for 20 minutes at 80°C with a bath containing 2 ml/l of 36° Bé NaOH, 2 g/l of Albite A ($Na_2S_2O_4$ at 85°C) and 0.5 g/l of DIAPAL CW (a non-ionogenic detergent produced by Montedison).

It was repeatedly rinsed and then dried.

The yellow dyeing so obtained possessed a high intensity and excellent stabilities to sunlight, to moisture and

...

to thermal treatments.

EXAMPLE 4 (applicative example)

A polyester-cotton fabric properly scoured, was printed with a paste having the following formulation:

| | | |
|---|---|---|
| dye (of example 1) | 8 | g |
| alginate thickener | 50 | g |
| diethylene glycol diacetate | 8 | g |
| water | 34 | g |

The dried fabric, retaining however an amount of solvent useful to fix the dye, was heat set in warm air at 200°C for 1-2 minutes.

It was washed at first in running water, then a boiling soaping was carried out and finally it was washed in running water, so obtaining a yellow print without contrasts, having excellent characteristics of fastness to sunlight, to moisture, to rubbing, and of stability to thermal treatments.

By operating similarly to the above-described examples, the dyes recorded on the following Table were prepared. All these dyes provided yellow dyeings and printings on polyester and polyester-cotton.

....

TABLE

0011295

| Example | Dye | Example | |
|---|---|---|---|
| 5 | 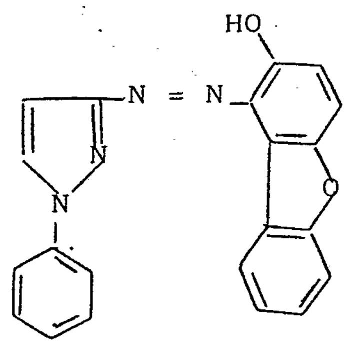 | 6 | 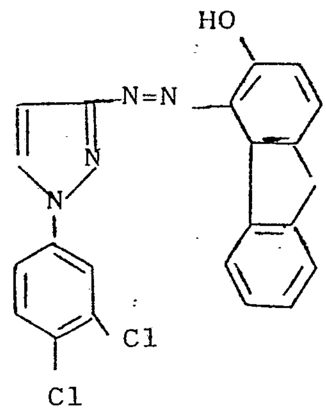 |
| 7 | 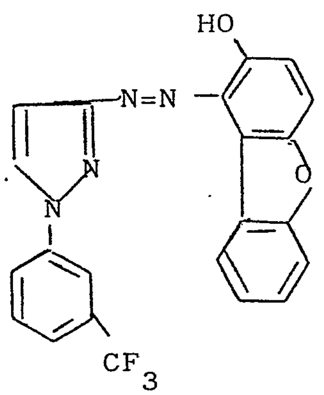 | 8 | 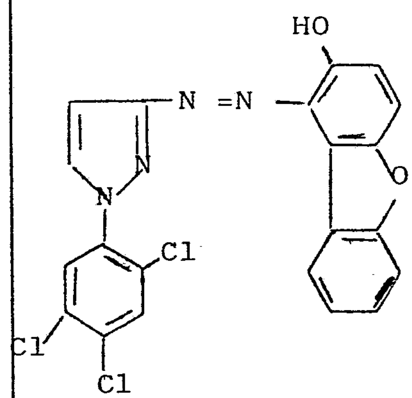 |
| 9 | 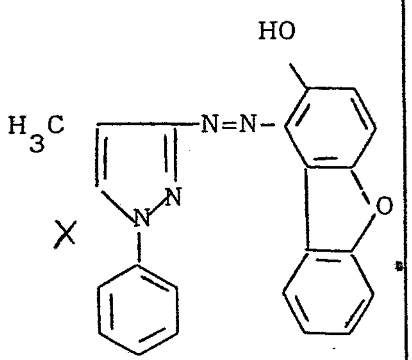 | 10 | 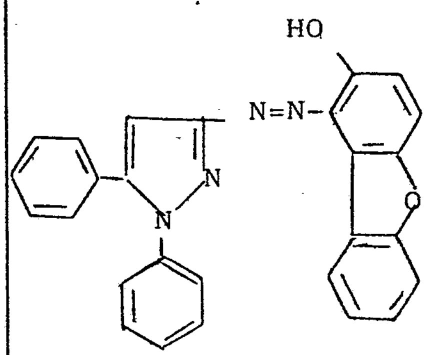 |

...

| Example | Dye | Example | Dye |
|---|---|---|---|
| 11 | 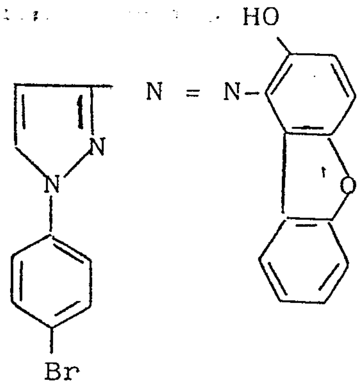 | 12 | 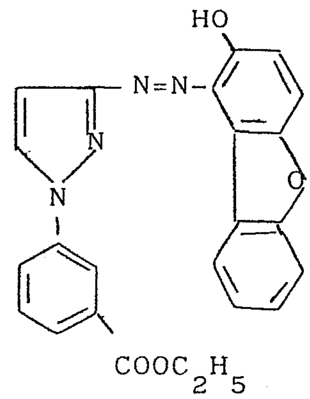 |
| 13 | 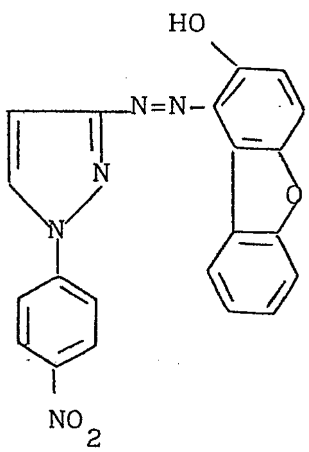 | 14 | 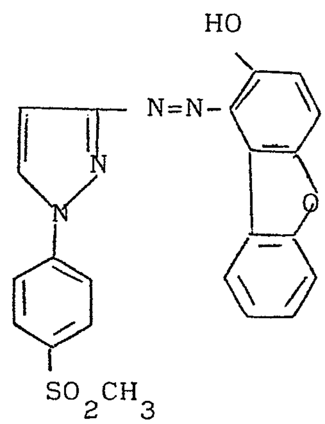 |
| 15 | 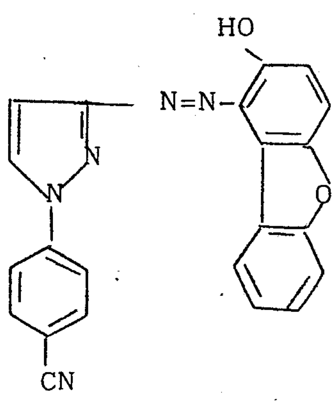 | 16 | 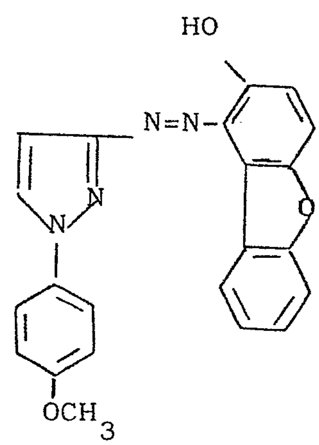 |

WHAT WE CLAIM IS:

1) Water-insoluble yellow monoazo dyes corresponding to the formula (I):

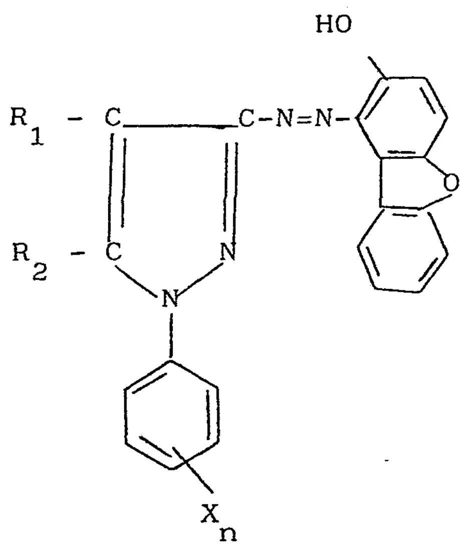

(I)

wherein $R_1$ and $R_2$ are indifferent hydrogen atoms and alkyls having up to 4 carbon atoms, phenyls, also substituted;
X is an atom selected from amongst hydrogen, chlorine and bromine, or it is an alkyl group, an alkoxyl group, a carboxyester group having up to 4 carbon atoms, a carboxyl group, a group $CF_3$, CN, $NO_2$, $SO_2CH_3$, a sulphonamido group, and
n is an integer selected from among 1, 2 and 3

2) A process for preparing the dyes of claim 1, characterized in that 1-phenyl-3-amino-pyrazols having the formula (II):

...

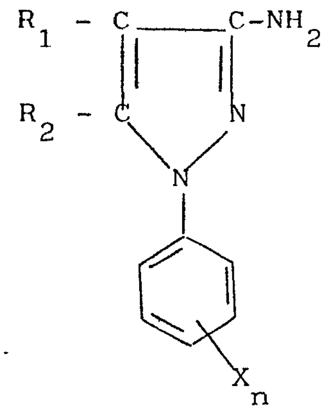

(II)

wherein $R_1$, $R_2$, X and n have the meanings specified in claim 1, are diazotized at a temperature ranging from 0° to 5°C approximately, and the resulting diazo derivatives are coupled on 2-hydroxydibenzofuran of formula (III):

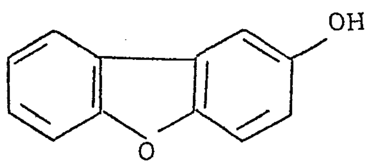

(III)

at a temperature ranging appromately from 5° to 20°C.

3) The process according to claim 2, characterized in that the diazo-derivative of the pyrazol of formula (II) is obtained by oxidative diazotization of the corresponding pyrazolin (IV).

4) The use of the dyes of claim 1 for dyeing and printing with yellow shade synthetic hydrophobic fibres, in particular polyester fibres.

5) The use of the dyes of claim 1 for dyeing and printing polyester-cotton blended fibres.

European Patent Office

# EUROPEAN SEARCH REPORT

0011295

Application number

EP 79 10 4521

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| A | DE - B - 1 240 601 (HOECHST)<br>* Column 1, lines 25-47; column 3, lines 23-24 *<br>-- | 1 | C 09 B 29/36<br>D 06 P 1/18<br>C 07 D 405/00 |
| A | FR - A - 1 424 732 (HOECHST)<br>* Page 1, column 1, lines 7-23; page 4, table, dye 4 *<br>-- | 1 | |
| A | GB - A - 1 531 697 (MONTEDISON)<br>* Claim 1 *<br>---- | 1 | TECHNICAL FIELDS SEARCHED (Int.Cl. 3)<br>C 09 B 29/36<br>29/00<br>D 06 P 1/18 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 20-02-1980 | DELANGHE |

EPO Form 1503.1 06.78